# EUROPÄISCHE PATENTANMELDUNG

(11) **EP 1 563 736 A1**
(43) Veröffentlichungstag der Anmeldung: **17.08.2005**
(21) Anmeldenummer: 05001882.9
(22) Anmeldetag: 29.01.2005
(51) Int. Cl.: A21D 13/00, A21D 8/06

(54) **Backware für die Zubereitung in der Mikrowelle**

(30) Priorität: 09.02.2004 DE 102004006744
(71) Anmelder: Dr. AUGUST OETKER NAHRUNGSMITTEL KG, 33617 Bielefeld (DE)
(72) Erfinder: Solbach, Hans-Werner, 59590 Geseke (DE); Beckmann, Hans-Wilhelm, 33659 Bielefeld (DE)
(74) Vertreter: Meyer, Gerd

(57) **Zusammenfassung**

Die vorliegende Erfindung betrifft eine Backware, die dadurch gekennzeichnet ist, daß eine mindestens vierfache Schichtung vorgenommen wird, wobei die unterste Schicht aus Teig von 2 - 7 mm Höhe besteht, die zweite Schicht aus einer Fettzubereitung oder Emulsion; diese beiden Schichten werden durch Backtriebmittel und einen Backvorgang auf eine Höhe von 10 - 38 mm, vorzugsweise 16 - 32 mm ausgedehnt, auf welche anschließend die dritte Schicht aus einer flüssigen bis strukturviskosen Flüssigkeit aufgegeben wird und mit einer vierten Schicht aus für Backwaren typischen Belägen wie Gemüse, Obst, Kakaoerzeugnisse, Fleischkomponenten, Käse, Samenfrüchte, Gewürze, Kräuter usw. und Gemischen daraus, versehen wird, sowie der Fertigbackware zuunterst eine geeignete Backunterlage zugefügt wird.

## Beschreibung

Bei der Erfindung handelt es sich um Backprodukte, die vom Verbraucher in der Mikrowelle schnell zubereitet werden können und einen knusprigen Boden sowie eine nicht zähe, weiche Krume aufweisen.

Eine für den Verbraucher wichtige Eigenschaft eines Lebensmittels ist seine einfache Zubereitung, wobei die Qualität des fertigzubereiteten Produktes eine Rolle für den Wiederkauf spielt. Die Zubereitung in der Mikrowelle zum Erwärmen von Speisen hat eine weite Verbreitung gefunden, da es sich hierbei um die derzeit schnellste Zubereitungsart für warme Speisen handelt.

Mikrowellen sind elektromagnetische Wellen, deren Länge im Zentimeterbereich liegt (1mm - 30cm). Zum Erwärmen der Speisen werden Mikrowellen mit einer Frequenz eingesetzt, die die in Nahrungsmitteln enthaltenen Wassermolekühle zur Rotation anregen (rd. 2,5 GHz). Die Rotationswärme überträgt sich dann auf die gesamte Speise. Problematisch ist jedoch das Erwärmen von Produkten, die nicht unerhebliche Anteile an Teig aufweisen.

Die Mikrowelleneinwirkung kann nur so kurz einwirken, dass es nicht zu einer vollständigen Erwärmung und zu einer weichen Struktur führt oder bei längeren Einwirkzeiten eine Retrogradation der Stärke einsetzt, die sich in einer zunehmenden Zähigkeit und somit Qualitätsverminderung des fertigen Gebäcks äußert. Ferner führt die Mikrowelleneinwirkung zu einer Übertragung der Feuchtigkeit vom Inneren der Produkte zu ihrer Oberfläche, so dass diese entweder feucht oder ausgetrocknet ist.

Mehrere Patente beschäftigen sich damit, diese negativen Effekte durch Einwirkungen von Stoffen zum Teig zu reduzieren.

EP 848908 beschreibt eine pulverisierte Emulsion, die einer Teigmischung zugesetzt wird. Die Vermischung erfolgt vor der Erwärmung in der Mikrowelle. Derartige Emulsionen verhindern jedoch nicht die Zähigkeit eines Backprodukts, da sie die Erwärmungsprozesse in der Mikrowelle kaum verändern. So wird insbesondere das Feuchtigkeitsaufkommen an der Oberfläche der Backprodukte nicht vermieden.

Aus dem Stand der Technik sind ferner Emulsionen in verschiedensten Zusammensetzungen bekannt, die auf die Backprodukte aufgetragen werden (US 5362504, US 5089278, US 5196219). In EP 829206 wird eine Öl-in-Wasser-Mikroemulsion offenbart, die eine Tröpfchengröße von 0,01 bis 0,5 µm aufweist. Durch das Auftragen solcher Emulsionen wird jedoch nur eine eingeschränkte Knusprigkeit des Lebensmittels erreicht.

Der Erfindung liegt die Aufgabe zugrunde, eine einfach herstellbare Backware für die Mikrowelle zu schaffen, die ähnliche physikalische und organoleptische Eigenschaften aufweist wie im Ofen erwärmte Backwaren, insbesondere einen knusprigen Aufbau.

In der vorliegenden Erfindung wurde überraschenderweise gefunden, dass durch einen besonderen geometrischen Aufbau der Backware diese die Qualität beim Erhitzen in der Mikrowelle negativ beeinflussenden Faktoren ausgeschlossen werden können, so dass ein Gebäck mit einer knusprigen Unterseite und einer elastischen, aber nicht zähen Krume erhalten wird, ohne dass spezielle Backzusätze zum Zweck der Verhinderung der Retrogradation der Stärke zuzusetzen wären.

Hierzu wird eine bestimmte geometrische Anordnung zum Aufbau einer Backware vorgenommen, die aus mindestens folgenden vier Schichten besteht:

Die unterste Schicht besteht aus Teig in der Höhe zwischen 2 und 7 mm, die darüber liegende Schicht aus einer Fettzubereitung, welche zusammen durch Back- und Gärschritte auf eine Höhe von 10 - 38 mm gebracht werden, die dritte Schicht aus einer Soße besteht, die vierte Schicht aus für Backwaren üblichen Belägen wie Gemüse, Obst, Kakaoerzeugnisse, Fleischkomponenten, Käse, Samenfrüchte, Gewürze, Kräuter usw. und mit Gemischen daraus, wobei die Komponenten der vierten Schicht auch einzeln und in mehreren Schritten aufgetragen werden.

Sodann wird das Produkt mit einer darunter liegenden, handelsüblichen Backunterlage, wie z.B. einer Suszeptorscheibe versehen und bei Raumtemperatur, gekühlt oder auch tiefgefroren angeboten. Zur Herstellung dieser dem Patentanspruch entsprechenden Backware werden z.B. folgende Zutaten eingesetzt:

Für den Teig etwa 50 - 60 Gewichtsteile Weizenmehl, 25 - 35 Gewichtsteile Wasser, 1 - 10 Gewichtsteile Hefe oder Backpulver, 1 - 1,5 Gewichtsteile Salz, 2,0 - 3,0 Gewichtsteile Saccharose, 0,8 - 1,3 Gewichtsteile Weizenbackmittel, 15 - 18 Gewichtsteile Fett und 0,7 - 0,8 Gewichtsteile Stärke.

Aus diesen Zutaten wird ein Teig hergestellt, wobei ein Teil des Fettes und die Stärke separat vermischt werden. Der Teig wird auf eine Schichtdicke von 2 - 7 mm gebracht und auf einen Backgutträger aufgetragen. Die separat hergestellte Mischung aus Fett und Stärke wird auf die Teigschicht gleichmäßig aufgetragen. Im Falle der Hefe als Triebmittel werden geeignete Gärphasen eingefügt, um während des Gärens und des Backens zu einer Höhenausdehnung des Teiges auf 10 - 38 mm zu gelangen, vorzugsweise 16 - 32 mm.

Der Backvorgang beträgt je nach Produkthöhe, Produktzusammensetzung und gewünschtem Gebäckvolumen zwischen 5 und 25 min. bei 130 - 150 °C Backraumtemperatur. Die nach dem Backen weiteren Belegungen erfolgen mit üblichen Soßen und einer weiteren Schicht aus einer oder mehreren Komponenten wie z.B. Gemüse, Obst, Kakaoerzeugnisse, Fleischkomponenten, Käse, Samenfrüchte, Gewürze, Kräuter usw. und Gemischen daraus.

Bei einer so gezielt eingestellten mindestens vierfach geschichteten Backware wurde überraschenderweise gefunden, dass die oben beschriebenen negativen Effekte des Zähwerdens oder der nicht ausreichenden Erhitzung nicht auftreten, sondern das Produkt eine hohe Knusprigkeit des Bodens bei einer gleichzeitigen zarten Textur der Krume aufweist.

## Patentansprüche

1. Backware für die Zubereitung in der Mikrowelle, **dadurch gekennzeichnet, dass** eine mindestens vierfache Schichtung vorgenommen wird, wobei die unterste Schicht aus Teig von 2 - 7 mm Höhe besteht, die zweite Schicht aus einer Fettzubereitung oder Emulsion; diese beiden Schichten werden durch Backtriebmittel und einen Backvorgang auf eine Höhe von 10 - 38 mm, vorzugsweise 16 - 32 mm ausgedehnt, auf welche anschließend die dritte Schicht aus einer flüssigen bis strukturviskosen Flüssigkeit aufgegeben wird und mit einer vierten Schicht aus für Backwaren typischen Belägen wie Gemüse, Obst, Kakaoerzeugnisse, Fleischkomponenten, Käse, Samenfrüchte, Gewürze, Kräuter usw. und Gemischen daraus, versehen wird, sowie der Fertigbackware zuunterst eine geeignete Backunterlage zugefügt wird.

2. Backware nach Anspruch 1, **dadurch gekennzeichnet, dass** es sich bei dem Backtriebmittel um Hefe handelt und mindestens eine Gärphase zur Volumenausdehnung durchgeführt wird.

3. Backware nach Anspruch 1, **dadurch gekennzeichnet, dass** es sich beim Backtriebmittel um Backpulver handelt.

4. Backware nach Anspruch 1, **dadurch gekennzeichnet, dass** es sich bei dem Backtriebmittel um Sauerteig handelt.

5. Backware nach Anspruch 1, **dadurch gekennzeichnet, dass** es sich bei dem Backtriebmittel um chemische Backtriebmittel handelt.

6. Backware nach Anspruch 1 und einem der Ansprüche 2 - 5, **dadurch gekennzeichnet, dass** die aufgetragene zweite Schicht während des Backens in die erste Schicht eindringt.

7. Backware nach Anspruch 1 und einem oder mehreren der vorangehenden Ansprüche, **dadurch gekennzeichnet, dass** die zweite Schicht aus einer Mischung von Fett und/oder Emulgatoren und/oder Verdickungsmitteln besteht.

8. Backware nach Anspruch 7, **dadurch gekennzeichnet, dass** es sich bei dem Verdickungsmittel um Stärke handelt.

9. Backware nach Anspruch 1 und einem oder mehreren der vorangehenden Ansprüche, **dadurch gekennzeichnet, dass** das in der zweiten Schicht aufgebrachte Fett einen Schmelzpunkt von mehr als 25 °C, vorzugsweise mehr als 35 °C, aufweist.

10. Backware nach Anspruch 1 oder mehreren der vorangehenden Ansprüche, **dadurch gekennzeichnet, dass** die dritte Schicht insbesondere aus strukurviskosen Flüssigkeiten, Soßen, Milchprodukten wie Creme Fräiche, Sauerrahm usw. besteht.

11. Backware nach Anspruch 1 und einem oder mehreren der vorangehenden Ansprüche, **dadurch gekennzeichnet, dass** der dritten Schicht neben den Soßen, Milchprodukten, Creme Fräiche, Sauerrahm und dergleichen vorher bereits Gewürze und Kräuter zugefügt werden.

12. Backware nach Anspruch 1 und einem oder mehreren der vorangehenden Ansprüche, **dadurch gekennzeichnet, dass** die vierte Schicht in mehreren einzelnen Schritten aufgetragen wird.

13. Backware nach Anspruch 1 und einem oder mehreren der vorangehenden Ansprüche, **dadurch gekennzeichnet, dass** die für die vierte Schicht verwendeten Komponenten aus Würfeln oder Quadern bestehen, bei denen die Summe der Länge, Höhe und Breite 80 mm, vorzugsweise 40 mm, nicht überschreitet.

14. Backware nach Anspruch 1 und einem oder mehreren der vorangehenden Ansprüche, **dadurch gekennzeichnet, dass** sie nach der Fertigung auf einem Backgutträger aus einer größeren Fläche in kleinere Portionen geschnitten wird und somit an den Teigrändern eine offenporige Struktur aufweist.

15. Backware nach Anspruch 14, **dadurch gekennzeichnet, dass** das Schneiden in kleinere Portionen vor dem Auftragen der dritten und/oder vierten Schicht erfolgt.

16. Backware nach Anspruch 14, **dadurch gekennzeichnet, dass** das Schneiden in kleinere Portionen nach dem Auftragen der dritten und/oder vierten Schicht erfolgt.

17. Backware nach Anspruch 1 und einem oder mehreren der vorangehenden Ansprüche, **dadurch gekennzeichnet, dass** sie nach der Fertigung tiefgefroren wird.

18. Backware nach Anspruch 1 und einem oder mehreren der vorangehenden Ansprüche, **dadurch gekennzeichnet, dass** es sich bei der geeigneten Backunterlage um eine metallisierte Suszeptorfolie handelt.
